# EUROPÄISCHE PATENTSCHRIFT

(11) **EP 1 624 445 B1**
(45) Veröffentlichungstag und Bekanntmachung des Hinweises auf die Patenterteilung: **14.03.2007**
(21) Anmeldenummer: 05012834.7
(22) Anmeldetag: 15.06.2005
(51) Int. Cl.: G10K 11/00

(54) **Elektroakustische Sendeantenne**
Electroacoustic sound transducer
Transducteur sonore éléctroacoustique

(30) Priorität: 05.08.2004 DE 102004038034
(43) Veröffentlichungstag der Anmeldung: 08.02.2006
(73) Patentinhaber: ATLAS ELEKTRONIK GMBH, D-28305 Bremen (DE)
(72) Erfinder: Busch, Rainer, Dr., 26131 Oldenburg (DE)

(56) Entgegenhaltungen:
- EP-A- 0 782 010
- EP-A- 0 887 119
- DE-C1- 19 528 881
- DE-U1- 7 724 070
- US-A- 4 876 675
- US-A- 4 916 675

## Beschreibung

Die Erfindung betrifft eine elektroakustische Sendeantenne für den Unterwassereinsatz der im Oberbegriff des Anspruchs 1 definierten Gattung.

Bei einer bekannten elektroakustischen Sendeantenne, die zum Nachschleppen durch ein Wasserfahrzeug ausgebildet ist (DE 197 43 096 C1), sind die zylindrischen Sendewandler im Schlauch hintereinander mit ihren Längsachsen fluchtend aufgereiht. Als akustisches Element enthält jeder Sendewandler einen Hohlzylinder aus Piezokeramik, der in Richtung seiner Zylinderachse durch beidseitige, ringförmige Abdeckungen vorgespannt ist. Der keramische Hohlzylinder ist von einer konvexen Außenschalung mit einer nach außen gewölbten Wand und von einer konkaven Innenschalung mit einer in den Innenraum des Hohlzylinders vorgewölbten Wand umgeben, die zusammen mit den beiden stirnseitigen Abdeckungen des Hohlzylinders einen einstückigen, geschlossenen, den Hohlzylinder in radialer Richtung mit Abstand umgebenden Metall-Hohlring mit elliptischen Querschnitt bilden.

Eine bekannte Sendeantenne für den Unterwassereinsatz (EP 0 887 119 A2) weist mindestens zwei elektroakustische Wandler auf, die koaxial und im Axialabstand vertikal übereinander in einem ständig gefluteten Schleppkörper aus Kunststoff angeordnet sind. Jeder elektroakustische Wandler hat einen Ringkörper, der einen zylindrischen Innenraum begrenzt und auf der Innen- und Außenseite mit einem Schutzmantel aus akustisch transparentem Material, z.B. Polyurethan oder Gummi, umgossen ist. Durch den Innenraum aller Ringkörper ist ein langgestrecktes Rohr oder ein langgestrecker Stab hindurchgeführt und die Ringkörper sind mittels Halter am Rohr oder Stab befestigt.

Jeder Ringkörper ist ein Ringwandler, wie er in der DE 195 28 881 C1 beschrieben ist. Dieser Ringwandler weist ein Aluminiumrohr auf, in dem eine Mehrzahl von um gleiche Umfangswinkel zueinander versetzte Axialschlitze eingebracht sind. Die Axialschlitze durchdringen das Aluminiumrohr radial vollständig und enden im Axialabstand vor den Rohrenden. In den Axialschlitzen sind Keramikplatten paarweise mit entgegengesetzter Polarisationsrichtung eingezwängt. An einer der freien Schmalflächen der Keramikplatte sind Elektroden montiert.

Eine bekannte breitbandig und omnidirektional sendende und empfangende Unterwasserantenne (US 4 916 675) weist mehrere in einem zylindrischen Gehäuse mit Axialabstand übereinander angeordnete ringförmige, elektroakustische Wandler auf. Jeder ringförmige Wandler besteht aus einer Vielzahl von sog. Tonpilz-Wandlerelementen, die um gleiche Umfangswinkel versetzt an einem Trägerrohr angeordnet sind. Alle Tonpilz-Wandlerelemente besitzen die gleiche Sende- bzw. Empfangsfrequenz und werden ohne Phasenverschiebung angesteuert. Jedes Tonpilz-Wandlerelement weist einen radial ausgerichteten Piezostack aus einer Mehrzahl von aneinander angeordneten piezoelektrischen Keramikscheiben und eine Front- und eine Rückmasse auf, die an den voneinander abgekehrten Stirnseiten des Piezostacks angeordnet sind. Die Rückmassen aller Tonpilz-Wandlerelemente sind über eine nachgiebige Dämpfungsschicht an dem Trägerrohr befestigt.

Der Erfindung liegt die Aufgabe zugrunde, eine flexible, einholbare und ausbringbare, als Wickel lagerbare Sendeantenne für ein breitbandiges Abstrahlen von Schall mit hohem Sendepegel zu schaffen.

Die Aufgabe ist erfindungsgemäß durch die Merkmale im Anspruch 1 gelöst.

Die elektroakustische Sendeantenne hat den Vorteil, dass die Sendewandler ohne Gefahr des Auftretens von Ermüdungserscheinungen des Keramikmaterials mit relativ hohen Spannungen betrieben werden können. Die an die Ringsegmente des Keramikrings angelegte Wechselspannung führt zu einer Ausdehnung und Schrumpfung der Ringsegmente in Umfangsrichtung, also zu den benachbarten Ringsegmenten hin bzw. von diesen Ringsegmenten weg. Da die Ausdehnung der Ringsegmente aber durch die benachbarten Ringsegmente blockiert wird, kommt es insgesamt zu einer Auslenkung des Keramikrings in radialer Richtung, wobei durch die auf den Umfang des Keramikkörpers aufgebrachte Umwicklung aus glasfaserverstärktem Kunststoff die auftretenden Zugspannungen auf ein für die Keramik unschädliches Maß reduziert werden. Mehrere Keramikringe sind im Abstand voneinander im Schlauch angeordnet, der mit Öl oder Gel gefüllt ist, das einen Wellenwiderstand aufweist, der dem von Wasser stark angenähert ist. Die Expansion und Kontraktion jedes Keramikrings, das sog. Atmen, wird auf die Schlauchhülle übertragen und in Wasserschallenergie umgewandelt. Durch das Einziehen des flexiblen Rohrs in den Schlauch längs der Schlauchseele unter Belassung eines Radialabstands zu den Ringinnenflächen der Keramikringe wird das von den Keramikringen umschlossene innere Hohlraumvolumen, das beim Schwingen oder "Atmen" der Keramikringe zum Schwingen angeregt wird, verkleinert. Hierdurch wird einerseits der Frequenzgang der Sendeantenne "aufgefüllt", d.h. deren Bandbreite vergrößert, und andererseits das Auftreten von Kavitation im Innern des Schlauchs zu höheren Sendepegeln hin verschoben, so dass größere Sendepegel möglich sind.

Zweckmäßige Ausführungsformen der erfindungsgemäßen Sendeantenne mit vorteilhaften Weiterbildungen und Ausgestaltungen der Erfindung ergeben sich aus den weiteren Ansprüchen.

Gemäß einer vorteilhaften Ausführungsform der Erfindung ist das Rohr mit einem Medium, z.B. einer Flüssigkeit wie Öl oder einem weichelastischen Material wie Gel gefüllt. Vorzugsweise ist das Rohr luftgefüllt, wodurch die Kavitationsgrenze weiter reduziert wird und sich ein maximaler Sendepegel erreichen lässt. Durch Auswahl des Mediums lässt sich auch der Auftrieb einer als Schleppantenne ausgebildeten Sendeantenne beeinflussen.

Gemäß einer vorteilhaften Ausführungsform der Erfindung wird als flexibles Rohr ein Metallschlauch oder ein metallbeschichteter Kunststoffschlauch verwendet und im flexiblen Rohr die für die Sendewandler erforderlichen elektrischen Leitungen für die Signal- und Stromleitung verlegt.

Gemäß einer fertigungstechnischen vorteilhaften Ausführungsform der Erfindung sind die aneinanderliegenden Radialflächen der Ringsegmente mit jeweils einer Elektrode belegt. Auf die auf voneinander abgekehrten Radialflächen eines Ringsegments liegenden Elektroden sind Elektrodenanschlüsse kontaktiert, die wechselweise zu der einen und anderen Stirnseite der Wandlerelemente herausgeführt sind. Alle Elektrodenanschlüsse, die an der gleichen Stirnseite des Keramikrings herausgeführt sind, werden durch einen Ringleiter elektrisch leitend miteinander verbunden, wodurch sich eine sehr einfache Verdrahtung ergibt.

Gemäß einer vorteilhaften Ausführungsform der Erfindung sind die Elektrodenanschlüsse in halbkreisförmigen Nuten geführt, die in die die Elektroden tragenden Radialflächen der Ringsegmente eingearbeitet sind und vorzugsweise nur bis zur Mitte der Radialflächen reichen. Auf diese Weise liegen die einander zugekehrten Elektroden trotz der Anbindung an die Elektrodenanschlüsse plan aufeinander und können miteinander verklebt werden.

Die Erfindung ist anhand eines in der Zeichnung dargestellten Ausführungsbeispiels im folgenden näher beschrieben. Es zeigen:
- Fig. 1: ausschnittweise eine perspektivische Ansicht einer elektroakustischen Sendeantenne mit teilweise aufgeschnittenem Schlauch,
- Fig. 2: einen Querschnitt längs der Schnittlinie II - II in Fig. 1,
- Fig. 3: eine perspektivische Ansicht des Keramikrings des Sendewandlers in Fig. 2,
- Fig. 4: eine vergrößerte perspektivische Darstellung zweier benachbarter Ringsegmente im Keramikring gemäß Fig. 3.

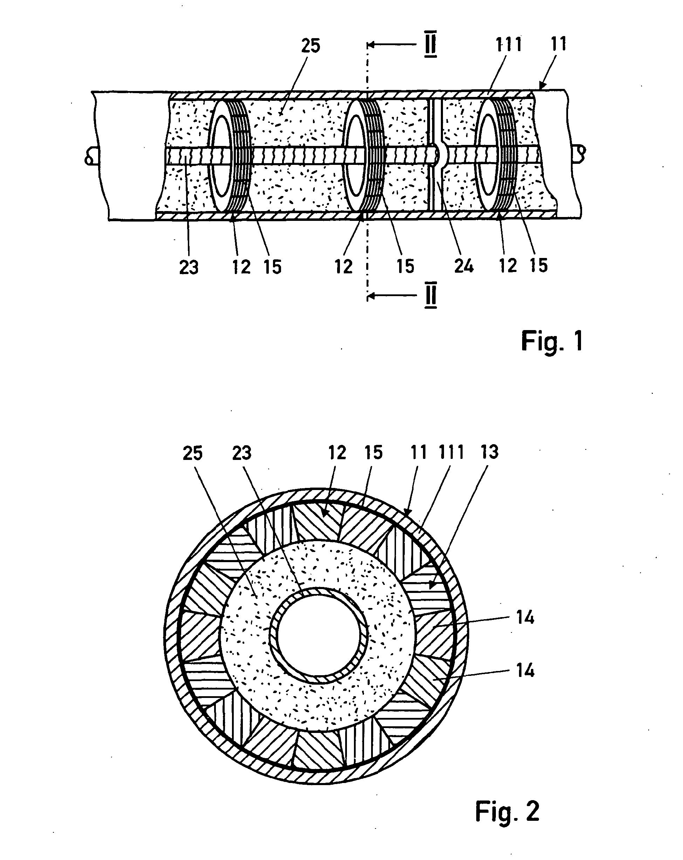

Die in Fig. 1 ausschnittweise und teilweise geschnitten dargestellte, elektroakustische Sendeantenne für den Unterwassereinsatz als sog. Schleppstrang, der von einem Wasserfahrzeug im Wasser nachgeschleppt wird, weist einen flexiblen Schlauch 11 aus schalltransparentem Material, beispielsweise Polyethylen, und eine Mehrzahl von im Schlauch 11 voneinander beabstandeten, hintereinander angeordneten, elektroakustische Sendwandler 12 auf, die sich an der Schlauchwand oder Schlauchhülle 111 abstützen.

Wie aus der Schnittdarstellung in Fig. 2 ersichtlich ist, weist jeder Sendewandler 12 einen Keramikring 13 auf, der aus einer Vielzahl von pyramidenstumpfförmigen Ringsegmenten 14 zusammengesetzt ist. Auf dem Außenumfang des Keramikrings 13 ist eine Umwicklung 15 aus glasfaserverstärktem Kunststoff (GFK) aufgebracht, die die gesamte Außenfläche des Keramikrings 13 überdeckt und am Keramikring 13 auftretende Radialkräfte aufzunehmen vermag. Über die Umwicklung 15 stützt sich der Keramikring 13 unmittelbar an der Schlauchhülle 11 ab.

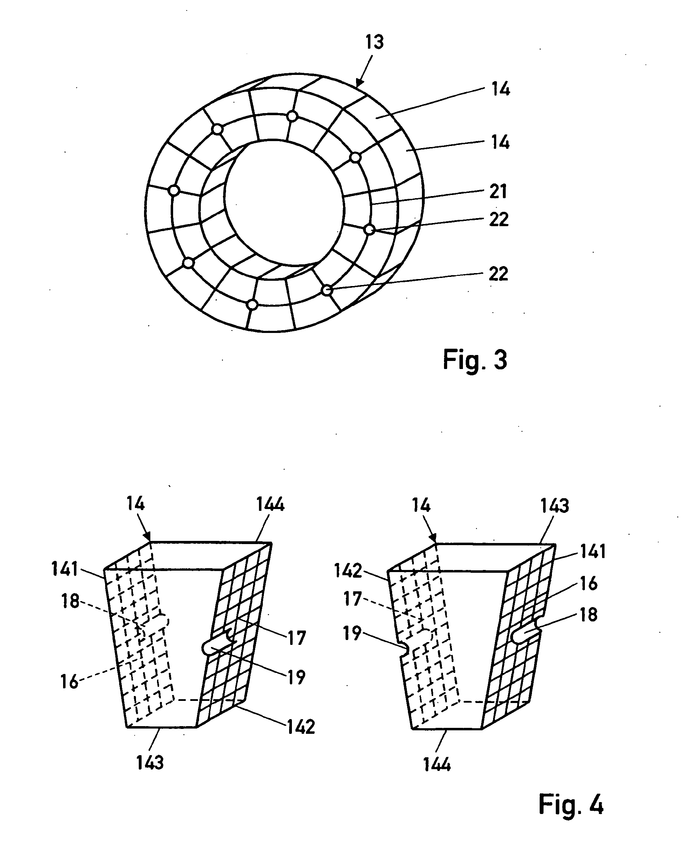

In Fig. 4 sind zwei nebeneinanderliegende Ringsegmente 14 perspektivisch vergrößert dargestellt. Die in Umfangsrichtung des Keramikrings 13 weisenden, radial ausgerichteten Seitenflächen 141 und 142 eines jeden Ringsegments 14 sind jeweils mit einer Elektrode 16 bzw. 17 belegt. Zur Kenntlichmachung der Elektroden 16 und 17 sind die beiden Seitenflächen 141, 142 in Fig. 4 mit einer Gitterstruktur überzogen. Die Elektroden 16, 17 werden aber von ebenen Metallflächen gebildet, die auf die Seitenflächen 141, 142 aufgebracht, z.B. aufgedampft, sind. In jede Seitenfläche 141, 142 ist eine in Achsrichtung sich erstreckende Axialnut 18 bzw. 19 eingebracht, die einen halbkreisförmigen lichten Querschnitt aufweist und sich etwa bis Mitte der Seitenfläche 141 bzw. 142 erstreckt, wobei die Axialnuten 18, 19 auf den voneinander abgekehrten Seitenflächen 141, 142 jeweils zu einer der voneinander abgekehrten Stirnflächen 143 bzw. 144 der Ringsegmente 14 herausgeführt sind. Diese Axialnuten 18, 19 dienen zum Einlegen von Elektrodenanschlüssen 20, über die die Elektroden 16, 17 mit einem Spannungspotential belegt werden.

Alle Ringsegmente 14 sind identisch ausgebildet. Von zwei benachbarten Ringsegmenten 14 wird jedoch beim Zusammensetzen des Keramikrings 13 immer ein Ringsegment 14 um 180° um seine Hochachse gedreht, die dies in Fig. 4 dargestellt ist. Damit liegen von benachbarten Ringsegmenten 14 einerseits die Elektroden 16 und andererseits die Elektroden 17 aneinander, sowie die Nuten 18 einerseits und die Nuten 19 andererseits deckungsgleich aufeinander. Damit treten auch die beiden zu den Elektroden 16 führenden und in den Axialnuten 18 einliegenden Elektrodenanschlüsse 20 auf der gleichen Stirnseite des Keramikrings 13 vor, die von der Summe der Seitenflächen 141 der Ringsegmente 14 gebildet wird, und die beiden zu den Elektroden 17 führenden und in den Axialnuten 19 einliegenden Elektrodenanschlüsse 20 auf der anderen Stirnseite des Keramikrings 13 vor, die von der Summe der Stirnflächen 144 der Ringsegmente 14 gebildet wird. Wie in der perspektivischen Ansicht des Keramikrings 13 in Fig. 3 zu sehen ist, werden jeweils die auf der gleichen Stirnseite des Keramikrings 13 vorstehende Elektrodenanschlüsse 20 elektrisch miteinander verbunden, wie dies in Fig. 3 durch die Ringverbindung 21 dargestellt ist. Die einzelnen Lötpunkte der Elektrodenanschlüsse 20 an der Ringverbindung 21 sind durch symbolisch dargestellte Punkte 22 gekennzeichnet. Jede Ringverbindung 21 hat eine Anzahl von Lötpunkten, die gleich der halben Anzahl der Ringsegmente 14 ist. Auf der in Fig. 3 nicht zu sehenden, hinteren Stirnseite des Keramikrings 13 ist eine gleiche Ringverbindung mit der gleichen Anzahl von Lötpunkten vorhanden. Beim Zusammensetzen werden die aneinanderliegenden Elektroden 16 bzw. 17 miteinander verklebt. Der so entstehende Keramikring 13 gemäß Fig. 3 wird auf seiner äußeren Ringfläche mit der Umwicklung 15 versehen.

Die einzelnen ringförmigen Sendewandler 12 werden im Schlauch 11 im definierten Abstand voneinander fixiert, wie hier im einzelnen nicht dargestellt ist. Längs der Seele des Schlauchs 11 ist ein flexibles Rohr 23 im Schlauch 11 verlegt, das mittels Abstandshalter 24 an der Schlauchhülle 111 abgestützt ist. Das flexible Rohr 23, das ein Metallschlauch oder ein Kunststoffschlauch mit Metallbeschichtung ist, verläuft durch das hohle Innere der kreisringförmigen Sendewandler 12 und hält einen definierten Radialabstand zu der Innenfläche der Keramikringe 13 der Sendewandler 12 ein. Das flexible Rohr 23, das in Fig. 2 im Schnitt dargestellt ist, ist luftgefüllt und nimmt - wie hier nicht dargestellt ist - die elektrischen Leitungen zur Signal- und Stromleitung für die Sendewandler 12 auf. Der Schlauch 11 wird nach Einbau der Sendewandler 12 und des flexiblen Rohrs 23 vollständig mit Öl 25 oder einem Gel gefüllt und endseitig flüssigkeitsdicht verschlossen.

Bei Anlegen einer elektrischen Wechselspannung an die beiden stirnseitigen Ringverbindungen 21 des Sendewandlers 12 erfolgt eine Ausdehnung der einzelnen Ringsegmente 14 in Umfangsrichtung des Keramikrings 13. Dadurch "atmet" der Keramikring 13 in Radialrichtung, d.h. er dehnt sich aus und zieht sich zusammen, wobei die Größe der "Atmung", also der Ausdehnung und der Schrumpfung des Keramikrings 13, durch die Größe der Wechselspannung und die Frequenz der "Atmung" durch die Frequenz der Wechselspannung bestimmt ist. Die am Keramikring 13 auftretenden Zugspannungen werden durch die Umwicklung 15 aus GFK auf ein Maß reduziert, das für die Keramik der Ringsegmente 14 unschädlich ist. Die Expansion und Kontraktion der Keramikringe 13 der Sendwandler 12 wird direkt auf die Schlauchhülle 111 übertragen und als Schalldruck in das Wasser eingekoppelt.

## Patentansprüche

1. Elektroakustische Sendeantenne für den Unterwassereinsatz, mit einem flexiblen, schalltransparenten Schlauch, der mit einem elektrisch isolierenden Medium, insbesondere Öl oder Gel, gefüllt ist, und mit im Schlauch (11) voneinander beabstandet hintereinander angeordneten, elektroakustischen Sendewandlern (12), die sich an der Schlauchhülle (111) des Schlauchs (11) abstützen, **dadurch gekennzeichnet, dass** jeder Sendewandler (12) einen Keramikring (13) aufweist, der aus mit radial ausgerichteten Seitenflächen (141, 142) unter Zwischenlage von Elektroden (16, 17) aneinanderliegenden Ringsegmenten (14) zusammengesetzt ist, die durch eine Radialkräfte aufnehmende, auf die Außenfläche des Keramikkörpers (13) aufgebrachte Umwicklung (15), zusammengehalten sind, und dass durch die Keramikringe (13) mit Radialabstand von deren Ringinnenfläche ein den Schlauch (11) durchziehendes, flexibles Rohr (23) hindurchgeführt ist.

2. Sendeantenne nach Anspruch 1, **dadurch gekennzeichnet, dass** das Rohr luftgefüllt ist.

3. Sendeantenne nach Anspruch 1 oder 2, **dadurch gekennzeichnet, dass** das flexible Rohr (23) ein Metallschlauch oder ein metallbeschichteter Kunststoffschlauch ist.

4. Sendeantenne nach einem der Ansprüche 1 - 3, **dadurch gekennzeichnet, dass** im flexiblen Rohr (23) zu den Sendewandler (12) führende, elektrische Leitungen verlegt sind.

5. Sendeantenne nach einem der Ansprüche 1 - 4, **dadurch gekennzeichnet, dass** jede radiale Seitenfläche (141, 142) der Ringsegmente (14) mit einer Elektrode (16, 17) belegt ist und dass die auf voneinander abgekehrten radialen Seitenflächen (141, 142) eines Ringsegments (14) liegenden Elektroden (16, 17) an wechselweise zu der einen und anderen Stirnseite (143, 144) des Keramikrings (13) herausgeführten Elektrodenanschlüssen (20) angeschlossen sind.

6. Sendeantenne nach Anspruch 5, **dadurch gekennzeichnet, dass** jeder Elektrodenanschluss (20) in einer in die Radialfläche (141, 142) eingebrachten, vorzugsweise bis etwa zur Mitte der Radialfläche verlaufenden Axialnut (18, 19) einliegt.

7. Sendeantenne nach Anspruch 6, **dadurch gekennzeichnet, dass** die Axialnuten (18, 19) einen halbkreisförmigen Querschnitt aufweisen.

8. Sendeantenne nach Anspruch 6 oder 7, **dadurch gekennzeichnet, dass** die Ringsegmente (14) in einer solchen Ausrichtung zu dem Keramikring (13) zusammengesetzt sind, dass die zu aneinanderliegenden Elektroden (16, 17) führenden Elektrodenanschlüsse (20) zur gleichen Stirnseite des Keramikrings (13) herausgeführt sind.

9. Sendeantenne nach Anspruch 8, **dadurch gekennzeichnet, dass** die die Elektrodenanschlüsse (20) aufnehmenden Axialnuten (18, 19) benachbarter Ringsegmente (14) deckungsgleich aufeinanderliegen.

10. Sendeantenne nach einem der Ansprüche 5 - 9, **dadurch gekennzeichnet, dass** auf jeder Stirnseite des Keramikrings (13) alle an dieser Stirnseite des Keramikrings (13) herausgeführten Elektrodenanschlüsse (20) miteinander elektrisch verbunden sind.

11. Sendeantenne nach einem der Ansprüche 5 - 10, **dadurch gekennzeichnet, dass** die Ringsegmente (14) über ihre aneinanderliegenden Elektroden (16, 17) miteinander verklebt sind.

12. Sendeantenne nach einem der Ansprüche 1 - 11, **gekennzeichnet durch** ihre Ausbildung als ein von einem Schleppfahrzeug ziehbarer Schleppstrang, indem der Schlauch (11) zum Aufnehmen von Zugkräften ausgebildet ist.

## Claims

1. Electroacoustic transmitting antenna for underwater use, with a flexible sound-transparent hose that is filled with an electrically insulating medium, especially oil or gel, and with electroacoustic transmitting transducers (12) arranged spaced apart from each other within the hose (11), said transducers (12) being supported against the wall (111) of the hose (11), **characterized in that** each transmission transducer (12) has a ceramic ring (13) that is made up of ring segments (14) with radially aligned side surfaces (141, 142) lying against each other and having electrodes (16, 17) inserted between them, with said ring segments (14) being held together by a winding (15) placed around the outer surface of the ceramic body (13) to take radial forces, and **in that** a flexible tube (23) passing through the hose (11) is inserted through the ceramic rings (13) with a radial clearance from the ring inner surface.

2. Transmitting antenna according to Claim 1,
**characterized in that** the tube is filled with air.

3. Transmitting antenna according to Claim 1 or 2, **characterized in that** the flexible tube (23) is a metal hose or a metal-coated plastic hose.

4. Transmitting antenna according to one of Claims 1 to 3, **characterized in that** electrical leads leading to the transmitting transducer (12) are laid in the flexible tube (23).

5. Transmitting antenna according to one of Claims 1 to 4, **characterized in that** each radial side surface (141, 142) of the ring segments (14) is provided with an electrode (16, 17) and that the electrodes (16, 17) lying on mutually opposed radial side surfaces (141, 142) of a ring segment (14) are connected to the electrode terminals (20) led out in turn to one and the other front face (143, 144) of the ceramic ring (13).

6. Transmitting antenna according to Claim 5, **characterized in that** each electrode terminal (20) is located in an axial groove (18,19) formed in the radial surface (141, 142), preferably running approximately central relative to the radial surface.

7. Transmitting antenna according to Claim 6, **characterized in that** the axial grooves (18,19) have a semi-circular cross section.

8. Transmitting antenna according to Claim 6 or 7, **characterized in that** the ring segments (14) are brought together in such an alignment relative to the ceramic ring (13) that the electrode terminals (20) leading to electrodes (16, 17) lying against each other are brought out to the same front face of the ceramic ring (13).

9. Transmitting antenna according to Claim 8, **characterized in that** the ring segments adjacent to the axial grooves (18, 19) taking the electrode terminals (20) lie flush against each other.

10. Transmitting antenna according to one of Claims 5 to 9, **characterized in that** on each front face of the ceramic ring (13) all the electrode terminals (20) that lead out to this front face of the ceramic ring (13) are electrically connected to each other.

11. Transmitting antenna according to one of Claims 5 to 10, **characterized in that** the ring segments (14) are bonded together by their electrodes (16, 17) lying against each other.

12. Transmitting antenna according to one of Claims 1 to 11, **characterized by** their embodiment as a towing cable that can be towed by a towing vehicle, in that the hose (11) is designed to take tensile forces.

## Revendications

1. Antenne d'émission électroacoustique à usage sous-marin, comprenant un tuyau flexible transparent au bruit qui est rempli d'un fluide électriquement isolant, notamment de l'huile ou du gel, et comprenant des transducteurs d'émission électroacoustiques (12) disposés les uns derrière les autres dans le tuyau (11) espacés les uns des autres, lesquels s'appuient sur l'enveloppe (111) du tuyau (11), **caractérisée en ce que** chaque transducteur d'émission (12) présente un anneau en céramique (13) qui se compose de segments d'anneau (14) aux surfaces latérales (141, 142) dirigées dans le sens radial et juxtaposés en intercalant des électrodes (16, 17), lesquels sont maintenus ensemble par un enroulement (15) absorbant les forces radiales appliqué sur la surface extérieure du corps en céramique (13), et **en ce qu'**un tube flexible (23) qui traverse le tuyau (11) passe à travers les anneaux en céramique (13) avec une distance radiale par rapport à leur surface intérieure d'anneau.

2. Antenne d'émission selon la revendication 1, **caractérisée en ce que** le tube est rempli d'air.

3. Antenne d'émission selon la revendication 1 ou 2, **caractérisée en ce que** le tube flexible (23) est un tuyau métallique ou un tuyau en matière plastique revêtu de métal.

4. Antenne d'émission selon l'une des revendications 1 à 3, **caractérisée en ce que** des lignes électriques menant vers les transducteurs d'émission (12) sont posées dans le tube flexible (23).

5. Antenne d'émission selon l'une des revendications 1 à 4, **caractérisée en ce que** chaque surface latérale radiale (141, 142) des segments d'anneau (14) est occupée par une électrode (16, 17) et **en ce que** les électrodes (16, 17) qui reposent sur des surfaces latérales radiales (141, 142) détournées l'une de l'autre d'un segment d'anneau (14) sont raccordées à des bornes d'électrode (20) sortant alternativement vers l'un ou l'autre côté frontal (143, 144) de l'anneau en céramique (13).

6. Antenne d'émission selon la revendication 5, **caractérisée en ce que** chaque borne d'électrode (20) repose dans une rainure axiale (18, 19) introduite dans la surface radiale (141, 142) et qui s'étend de préférence jusque approximativement au centre de la surface radiale.

7. Antenne d'émission selon la revendication 6, **caractérisée en ce que** les rainures axiales (18, 19) présentent une section transversale en forme de demi-cercle.

8. Antenne d'émission selon la revendication 6 ou 7, **caractérisée en ce que** les segments d'anneau (14) sont composés dans une orientation telle par rapport à l'anneau en céramique (13) que les bornes d'électrode (20) qui mènent aux électrodes (16, 17) juxtaposées sortent du même côté frontal de l'anneau en céramique (13).

9. Antenne d'émission selon la revendication 8, **caractérisée en ce que** les segments d'anneau (14) voisins des rainures axiales (18, 19) qui reçoivent les bornes d'électrode (20) sont superposés en coïncidence.

10. Antenne d'émission selon l'une des revendications 5 à 9, **caractérisée en ce que**, de chaque côté frontal de l'anneau en céramique (13), toutes les bornes d'électrode (20) qui sortent de ce côté frontal de l'anneau en céramique (13) sont reliées électriquement entre elles.

11. Antenne d'émission selon l'une des revendications 5 à 10, **caractérisée en ce que** les segments d'anneau (14) sont collés entre eux par le biais de leurs électrodes juxtaposées (16, 17).

12. Antenne d'émission selon l'une des revendications 1 à 11, **caractérisée par** sa configuration sous la forme d'un tronçon à remorquer pouvant être tracté par un véhicule de remorquage en ce que le tuyau (11) est configuré pour absorber les forces de traction.
